Europäisches Patentamt

European Patent Office

Office européen des brevets

(19)

(11) EP 0 848 308 A1

(12) EUROPEAN PATENT APPLICATION

(43) Date of publication:
17.06.1998 Bulletin 1998/25

(21) Application number: 97309968.2

(22) Date of filing: 10.12.1997

(51) Int Cl.6: **G05B 19/19**, F15B 15/20, A22C 17/00

(84) Designated Contracting States:
**AT BE CH DE DK ES FI FR GB GR IE IT LI LU MC NL PT SE**
Designated Extension States:
**AL LT LV MK RO SI**

(30) Priority: **12.12.1996 GB 9625796**

(71) Applicant: **MEAT AND LIVESTOCK COMMISSION**
Snowdon Drive, Milton Keynes MK6 1AX (GB)

(72) Inventor: **Purnell, Graham**
North Somerset ES21 5AJ (GB)

(74) Representative:
**Skone James, Robert Edmund et al**
**GILL JENNINGS & EVERY**
**Broadgate House**
**7 Eldon Street**
**London EC2M 7LH (GB)**

(54) **Positioning system**

(57) A positioning system comprising at least two position control assemblies (41-44), each assembly being independently actuable between contracted and expanded configurations defining a respective stroke length. The assemblies (41-44) are coupled together such that actuation of one of the assemblies causes movement of another assembly. The stroke lengths of at least two of the position control assemblies (41-44) are different.

Fig.1.

Printed by Jouve, 75001 PARIS (FR)

EP 0 848 308 A1

## Description

The present invention relates to a method and apparatus for controlling the position of an object.

Accurate control of position is required in a number of fields of industry. For instance in an automated assembly production line, an item to be assembled may need to be accurately positioned, using for example a robotic arm.

Common problems of conventional positioning systems include lack of accuracy (i.e. coarse positioning resolution), low range of movement, high cost of components, lack of robustness and complexity of control requirements.

In accordance with a first aspect of the present invention there is provided a positioning system comprising at least two position control assemblies, each assembly being independently actuable between contracted and expanded configurations defining a respective stroke length, wherein the assemblies are coupled together such that actuation of one of the assemblies causes movement of another assembly, and wherein the stroke lengths of at least two of the position control assemblies are different.

The positioning system according to the present invention is cheap, robust and simple to construct and operate. The total length of the positioning system defines a controlled point, the position of which can be controlled by actuating one or more selected ones of the position control assemblies. The stroke length of each assembly is generally defined by the distance travelled by a movable part of the assembly when the assembly is actuated. The present invention maximises the positional resolution of the system by the provision of assemblies with different stroke lengths.

Typically the system comprises three or more position control assemblies coupled in series. By providing more than two position control assemblies, the range of movement and positioning resolution of the system is increased.

The positioning system may include two or more control assemblies having the same stroke length. Preferably however the stroke length of each assembly is different. This achieves the greatest possible positioning resolution for a given number of position control assemblies.

In a preferable embodiment the different stroke lengths define a binary power series (e.g. 1,2,4,etc.). In this case, a positioning system with n assemblies gives a range of movement of $2^n-1$ length units with a resolution of one length unit (as defined by the smallest stroke length). A binary system of this type has the advantages of providing equal increments within the range of movement, and being easily controllable by generating a binary number, each binary digit actuating a respective assembly.

The stroke lengths may be arranged in any order (e.g. 1, 8, 4, 2 or 2, 1, 4, 8 etc.) but preferably the stroke lengths are arranged in ascending or descending order.

The positioning system may be actuated manually. Typically however the system further comprises an input device for inputting a required position, a processor for selecting one or more assemblies in accordance with the required position, and actuating means for actuating the selected assemblies.

The assemblies may be provided by any suitable expandable element, for instance flexible pipes, air bags etc. However preferably each assembly comprises a support and a positioning member mounted to the support for movement between the contracted and expanded configurations, wherein each support is coupled to an adjacent support by a respective positioning member.

The assemblies may coupled end-to-end whereby the strokes of each assembly do not overlap. Alternatively the assemblies may be coupled whereby the strokes of each assembly overlap, thus making the system more compact in the stroke direction. In an overlapping system the assemblies may be arranged side-by-side but preferably the assemblies are nested, thus making the system more compact in a direction transverse to the stroke direction.

The assemblies may be driven between their expanded and contracted configurations by any suitable drive means, for instance by a motor. Preferably however the assemblies are driven by a fluid such as air. In a preferable embodiment each assembly comprises a piston and a cylinder in which the piston is housed, and the piston is moved in use by the action of fluid pressure across the piston. The cylinder may be double-acting (i.e. the piston being driven in both directions by fluid pressure) or single acting (i.e. driven in one direction by fluid pressure and in the other direction by a spring return). Since air is nontoxic and non-flammable, a pneumatic system has advantages in food processing applications and in hazardous environments.

Adjacent cylinders may be coupled by a piston rod attached to a respective piston, or by a carriage which is magnetically coupled to a respective piston. The carriage may be mounted on the exterior of the cylinder, and magnetically coupled to the piston through the cylinder wall.

The assemblies may be constructed and coupled such that they provide positional control along a substantially straight line. Alternatively the assemblies may be suitably shaped and coupled such that they provide positional control along a circular or otherwise shaped non-linear path.

The positioning system may provide positional control in a single dimension. Alternatively the positioning system may provide positional control in two or three dimensions. For instance two or three one dimensional positioning systems may be connected orthogonally to provide control of position along respective orthogonal axes.

The assemblies may be actuable between more than two discrete configurations and at an extreme may be continuously controllable, eg. actuable to any intermediate point between the contracted and expanded configurations. In this case means for measuring the configuration of the assemblies may be provided, along with a feedback system which controls the configuration of the assemblies in accordance with the measured configuration. The measurement can be achieved by a variety of sources including limit switches which detect the throw of each cylinder, back pressure sensing, or an external position transducer.

Preferably however, the system is provided without any position measurement or feedback. In this case the assembly is typically only driven between its contracted and expanded configurations. This enables the assemblies to be actuated by a simple ON/OFF signal. Typically each assembly is fully contracted in its contracted configuration, and fully expanded in its expanded configuration. For instance in the case of a double-acting pneumatic cylinder the rear and front walls of the cylinder limit the extent of movement of the piston.

The positioning system according to the present invention may be utilized in a wide variety of applications. The apparatus is particularly applicable in any application which requires a low cost, reliable positioning system. For instance the system may be used in a system for moving products in a factory, for instance on a production line. However the system is particularly applicable for use in food processing applications in which the positioning system is coupled to a guide which, in use, abuts an item of food. The robustness of the system makes it suitable in a food processing environment. The system may be utilized in a meat processing apparatus, for example for positioning a carcase into a desired position relative to a cutting device. In a preferred embodiment there is provided apparatus for trimming surplus fat from a cut of meat comprising an abutment wall for engagement by the outer surface of a fat layer on the cut of meat; a cutter which, in use, moves along a cutting path extending along the fat layer; and one or more positioning systems according to the first aspect of the present invention engaging the abutment wall or the cutter for varying the distance between the abutment wall and the cutting path at one or more points along the length of the cutting path.

Where an input device is provided for inputting a required position, the input device typically comprises means for determining a thickness of the fat layer. The thickness may be input manually but in a preferable embodiment is determined automatically, for instance by a TV camera and image processing means for determining the fat thickness from an image collected by the TV camera.

In accordance with a second aspect of the present invention there is provided a method of positioning an object, the method comprising selecting one or more position control assemblies in a positioning system according to the first aspect of the present invention coupled to the object, and actuating the selected assemblies to position the object.

The method according to the second aspect of the invention provides a particularly simple method of providing control of position of an object.

The method may be carried out as part of any suitable application, but preferably the method is employed in a method of positioning an item of food, the method comprising coupling the positioning system to an item of food, selecting one or more of the position control assemblies, and actuating the selected assemblies. In a preferable embodiment the item of food is an item of meat such as a carcase or cut of meat.

In a preferable embodiment the method is provided as part of a method of trimming surplus fat from a cut of meat, the method comprising engaging the outer surface of a fat layer on the cut of meat with an abutment; passing a cutter through the fat along a cutting path; and varying the distance between the abutment wall and the cutting path at one or more points along the length of a cutting path using one or more positioning systems according to the first aspect of the invention which engage the abutment wall or the cutter.

A number of embodiments of the present invention will now be described with reference to the accompanying drawings, in which:-

Figure 1 is a schematic diagram of a first embodiment of a positioning system according to the present invention;
Figures 2A-E show a positioning system of the type shown in Figure 1 in a variety of configurations;
Figure 3 shows a positioning system of the type shown in Figures 1 and 2 illustrating the use of a binary address;
Figure 4A illustrates a first alternative positioning system;
Figure 4B illustrates a second alternative positioning system;
Figures 5A-D show the system of Figure 4B in a variety of different configurations;
Figure 6 shows an example of a lamb chop;
Figure 7 shows another example of a lamb chop;
Figure 8 shows, in diagrammatic form, the chop of Figure 6 installed in equipment for trimming surplus fat;
Figure 9 is a schematic diagram showing a fat trimming system; and
Figure 10 illustrates a third alternative positioning system.

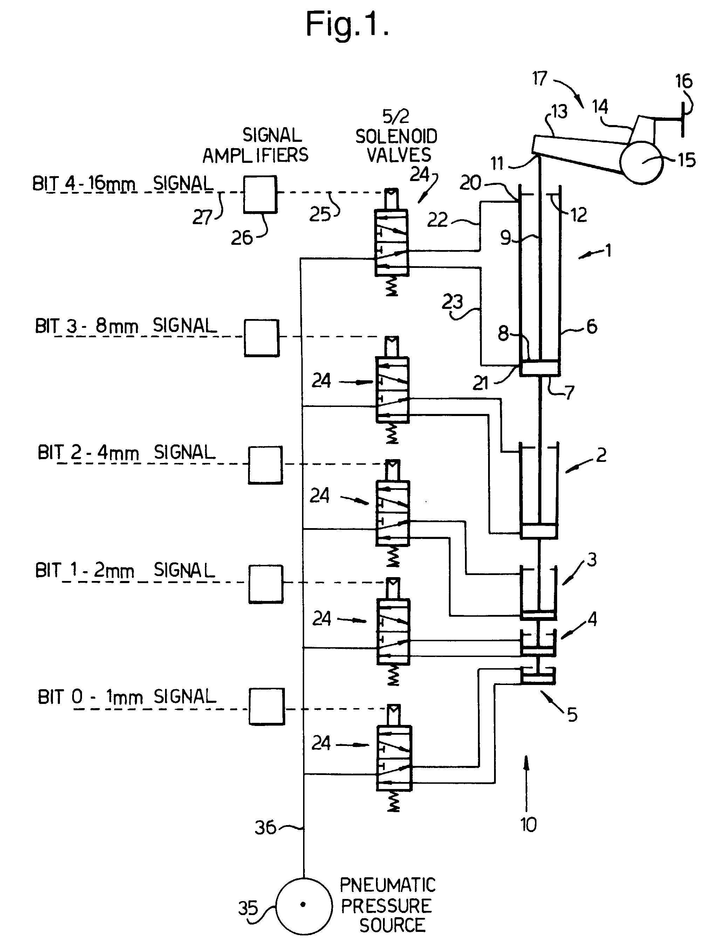

Referring to Figure 1, a positioning system 10 is illustrated comprising five serially coupled position control assemblies 1-5. Each assembly 1-5 is of similar construction and the front assembly 1 will be described below by way of example. Assembly 1 comprises a cylinder 6 having a cylinder base 7, the cylinder 6 housing a piston head 8 and a piston shaft 9. The piston shaft 9 of each of the assemblies 2-5 is attached to the cylinder base 7 of an adjacent assembly. The cylinder 6 of the rear assembly 5 is fixed to a support (not shown). The stroke of each assembly (defined by the distance between the retracted piston position shown in Figure 1 which is limited by the cylinder base 7, and a fully extended position not shown which is limited by the cylinder front wall 12) varies in the form of a binary power series. In this example the strokes of assemblies 1-5 are 80mm, 40mm, 20mm, 10mm and 5mm respectively. The end 11 of the piston shaft 9 of assembly 1 is positioned as required by independently actuating selected ones of the assemblies 1-5 as described below.

Each cylinder 6 is a double-acting cylinder comprising a pair of ports 20,21 which communicate with the cylinder chamber on opposite sides of piston head 8. The ports 20,21 are in pneumatic communication with respective pneumatic lines 22,23. Pneumatic lines 22,23 are connected to a 5/2 solenoid valve 24 of a known type. The 5/2 solenoid valves 24 are connected in parallel to pneumatic pressure source 35 via supply line 36.

Figure 1 illustrates the positioning system 10 in its datum position. That is, each piston head 8 is fully retracted and each 5/2 solenoid valve 24 is in its datum position. Each 5/2 solenoid valve 24 is controlled by a binary control signal on a respective control line 25 connected to signal amplifier 26. The amplifiers 26 amplify a binary signal input on a respective input line 27. In the datum position shown in Figure 1, each input line 27 carries a binary zero. In the datum position, the 5/2 solenoid valve 24 supplies pneumatic pressure to pneumatic line 22 and vents pneumatic line 23. When the signal on input line 27 changes to a binary one, the valve 24 is driven to a second position in which input line 23 is connected to the pneumatic pressure source 35, and pneumatic line 22 is vented. Thus, by changing the control signal on input line 27 from zero to one, the piston head 8 is driven between a first, retracted position, and a second, extended position.

Similarly, by changing the control signal on input line 27 from one to zero, the valve 24 is returned to the datum position and the piston head 8 is driven back to its retracted position.

The end 11 of the piston shaft 9 of assembly 1 defines a point which is positioned by the positioning system 10. In the example shown in Figure 1, the end 11 is attached to lever arm 13 of a 5:1 lever system 17 comprising a lever arm 14 which pivots with lever arm 13 about pivot point 15. Lever arm 14 is attached to a positioned object 16. By suitably selecting the ratio of the lengths of lever arms 13,14, the movement of the end 11 of piston shaft 9 can be converted into a desired range and resolution of movement of positioned object 16.

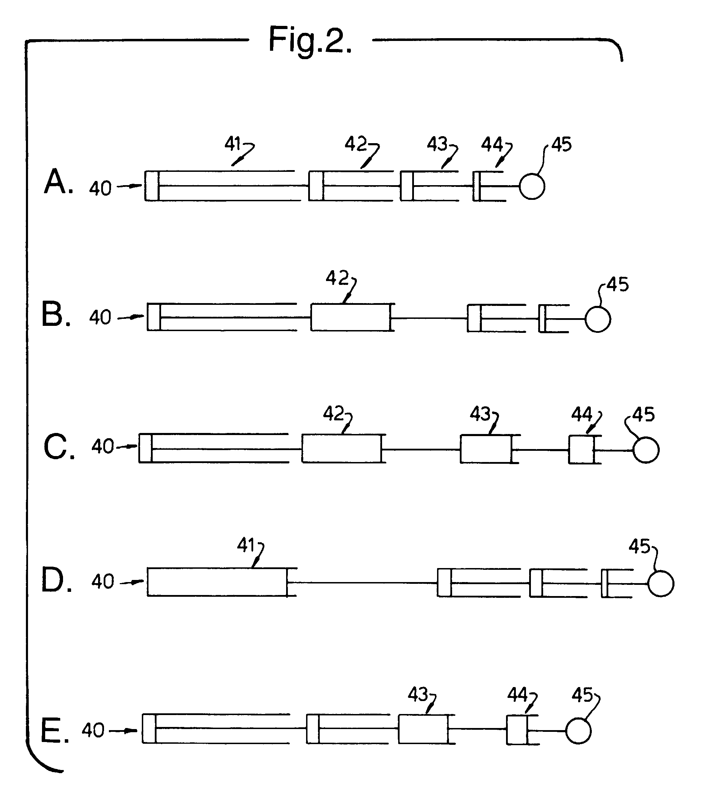

Figure 2 illustrates the principle of the positioning system illustrated in Figure 1. Positioning system 40 is of a similar construction to positioning system 10. System 40 comprises four serially coupled position control assemblies 41-44 which control the position of a point 45. The system 40 is shown in its datum position in Figure 2A. The assemblies 41-44 have stroke lengths of 8, 4, 2, and 1 units respectively.

In the position shown in Figure 2B, assembly 42 has been actuated and point 45 has been moved by four units.

In the position shown in Figure 2C, assemblies 42, 43 and 44 have been actuated and point 45 has been moved by seven units.

In the position shown in Figure 2D, assembly 41 has been actuated and point 45 has been moved by eight units.

In the position shown in Figure 2E, assemblies 43 and 44 have been actuated, and point 45 has been moved by three units.

As illustrated by Figure 2, the positioning system 40 has a range of movement of fifteen units, with a resolution of one unit. Any position in the range can be achieved by actuating selected ones of the assemblies 41-44.

Thus for a system of desired range 0 -31mm with a desired resolution of 1mm:-

$$\frac{range}{resolution} = no.\ of\ steps;$$

and

$$2^{n-1} < no.\ of\ steps \leq 2^n$$

where n is the required number of assemblies.

Thus: no. of steps = (31-0)/1 = 31; and $2^4 < 31 <= 2^5$

Hence, cylinders required are:

$2^0 = 1mm$
$2^1 = 2mm$
$2^2 = 4mm$
$2^3 = 8mm$
$2^4 = 16mm$

The range, resolution and mechanical advantage can also be suitably adjusted by the use of a lever system 17 of the type illustrated in Figure 1 or other suitable gearing system.

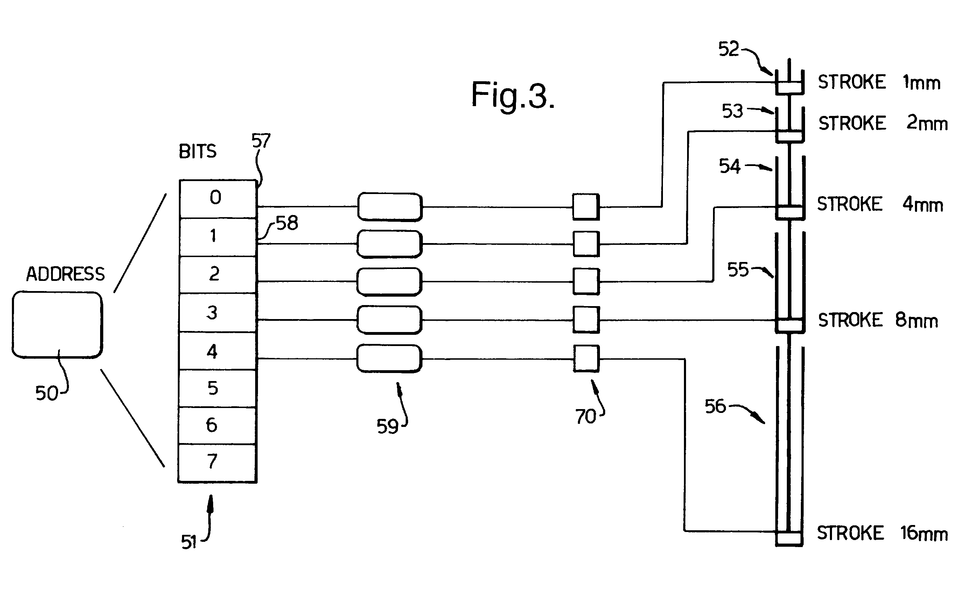

A positioning system of the type illustrated in Figures 1 and 2 is particularly suited to be controlled by a processor (such as a personal computer (PC)) with a digital output facility operating the solenoid valves 24. It is typical of a PC digital output board that each line of output is one bit of a memory address. This principle is illustrated in Figure 3. Memory address 50 comprises eight bits 51 which are coupled to drive electronics 59 and solenoid valves 70. The system of Figure 3 makes use of the binary address with the shortest assembly 52 (with a stroke of 1mm) being attached to the least significant bit 57 (bit 0) of the address, 2mm assembly 53 being attached to next most significant bit 58 (bit 1) etc. Thus a value written to the memory address 50, expressed in binary form, creates a high signal on the bits required to build up a position equivalent to the value written to the address, as illustrated in Table 1 below.

Table 1

| address value | binary value | byte 7654 3210 | high bits | strokes extended (mm) | total position (mm) |
|---|---|---|---|---|---|
| $0_{10}$ | $0_2$ | 0000 0000 | none | 0 | 0 |
| $2_{10}$ | $10_2$ | 0000 0010 | 1 | 2 | 2 |
| $3_{10}$ | $11_2$ | 0000 0011 | 0,1 | 1,2 | 1+2=3 |
| $9_{10}$ | $1001_2$ | 0000 1001 | 0,3 | 1,8 | 1+8=9 |
| $19_{10}$ | $10011_2$ | 0001 0011 | 0,1,4 | 1,2,16 | 1+2+16=19 |
| $27_{10}$ | $11011_2$ | 0001 1011 | 0,1,3,4 | 1,2,8,16 | 1+2+8+16=27 |

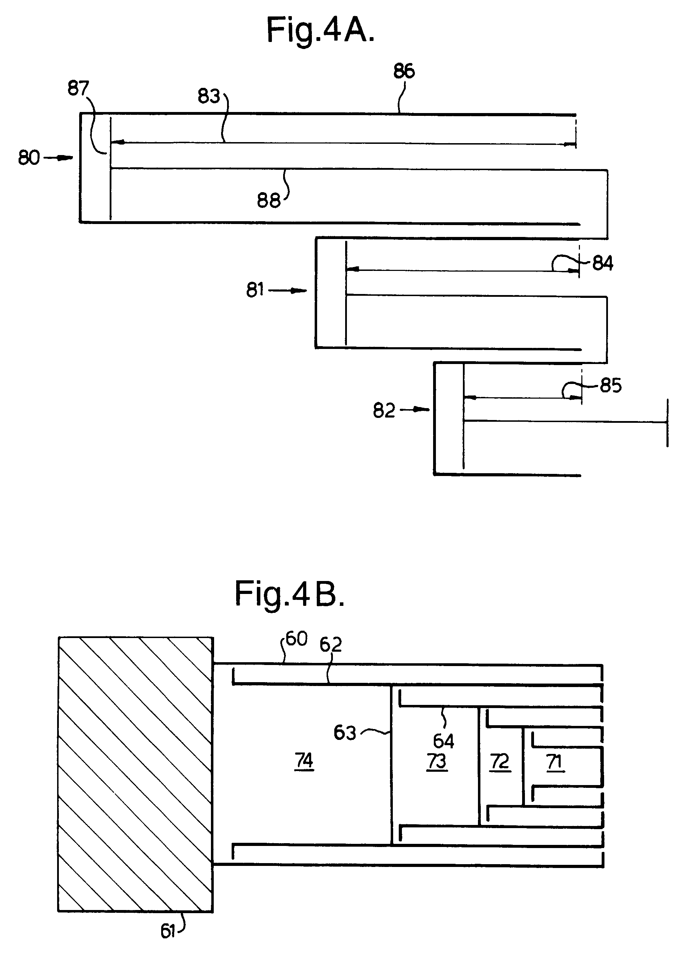

Figures 4A and 4B illustrate alternative positioning systems.

In Figure 4A three positioning assemblies 80-82 are arranged side-by-side. Each assembly comprises a double-acting cylinder 86 housing a piston comprising a piston head 87 and a piston shaft 88. The piston shaft 88 of the two upper assemblies 80,81 are coupled to the front edge of an adjacent cylinder 86 whereby the strokes 83-85 of the three assemblies overlap. As can be seen by comparing Figure 1 and Figure 4A, the overlapping arrangement of Figure 4A achieves greater compactness in the stroke direction.

The system of Figure 4B comprises a series of four nested position control assemblies 71-74. The largest assembly 74 comprises a single acting pneumatic cylinder 60 attached to a base 61. Mounted for reciprocal movement within the cylinder 60 is a piston 62 having a piston head 63.

Position control assemblies 71-73 are of a similar construction to assembly 74 and have a different stroke length, which decreases in a binary series in a similar manner to the systems shown in Figures 1-3. That is, position control assembly 74 has a stroke length of eight units, assembly 73 has a stroke length of four units, assembly 72 has a stroke length of two units, and assembly 71 has a stroke length of one unit.

The nested telescopic system of Figure 4B can be seen to be more compact than the end-to-end system of Figure 1 in the stroke direction, and more compact than the stacked telescopic system of Figure 4A in a direction transverse to the stroke direction.

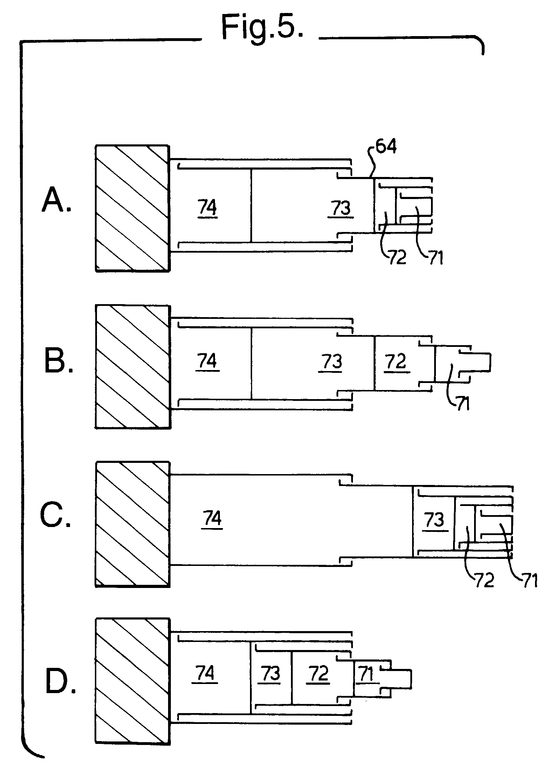

Figure 5A shows the system of Figure 4B extended by four units. In this case, piston 64 of position control assembly 73 has been actuated and piston 64 has been driven from the retracted position shown in Figure 4B to the extended position shown in Figure 5A. The assemblies are driven by a pneumatic control circuit similar to the circuit shown in Figure 1. However, since the cylinders are single acting, 3/2 solenoid valves are required instead of the 5/2 solenoid valves 24 shown in Figure 1.

Figures 5B, 5C and 5D show the positioning system driven by seven units, eight units and three units respectively.

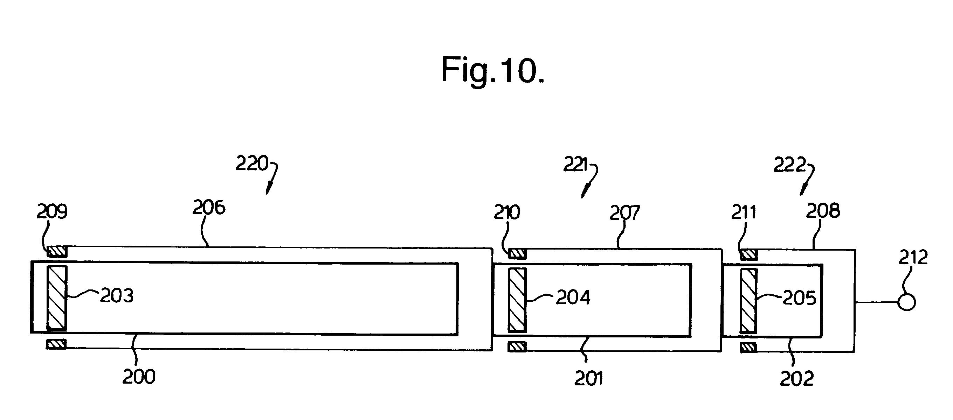

Figure 10 illustrates a further, alternative positioning system according to the present invention. Three position control assemblies 220-222 of differing stroke lengths are coupled in series to position a point 212. Each assembly comprises a double-acting pneumatic cylinder 200-202, housing a respective rodless magnetic piston 203-205. Each piston 203-205 is driven between the left-hand position shown in Figure 10 and a right-hand position (not shown) by applying fluid pressure on either side of the piston. A cylindrical carriage 206-208 is slidably mounted on the exterior of each cylinder. Each carriage 206-208 carries a magnetic ring 209-211 which couples magnetically with a respective piston 203-205 through the cylinder walls. The carriages 206,207 are each mounted to an adjacent cylinder 201,202. The last carriage 108 is mounted to the positioned point 212.

In use, as each piston 203-205 is driven between its left and right hand positions, the associated carriage 206-208 is driven between its retracted and extended positions.

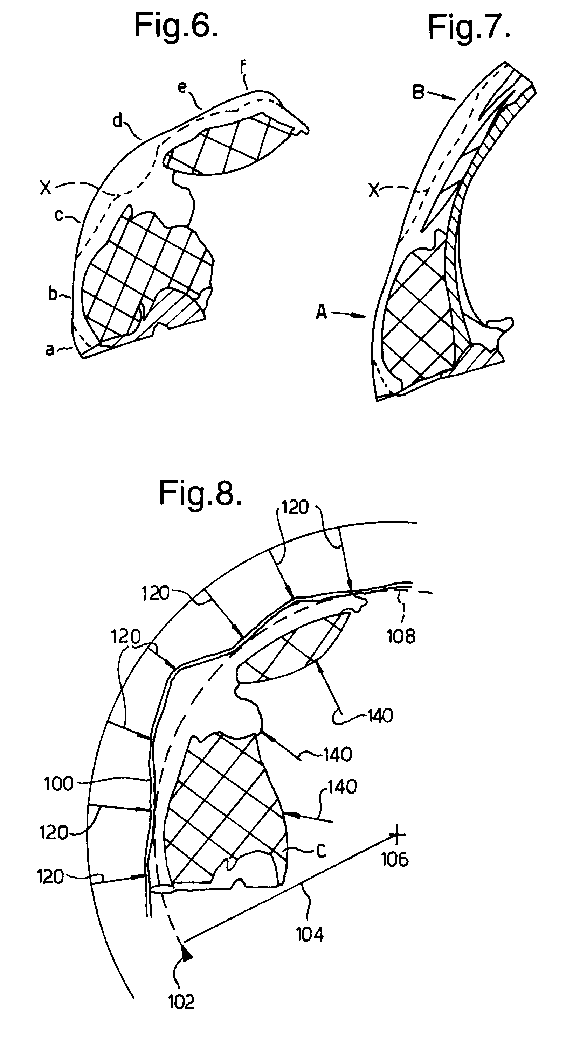

The positioning systems illustrated in Figures 1 to 5 and 10 can be implemented in a number of different positioning applications. A single illustrative example in a system for trimming surplus fat from a cut of meat will now be described with reference to Figures 6 to 9.

In Figures 6 to 8, lean meat is represented by cross-hatching, bone is represented by single line diagonal hatching, and areas of fat are shown unhatched.

The chops shown in Figures 6 and 7 are typical of a loin chop (Figure 6) and a cutlet (Figure 7). They are taken from the same carcass, but it will be appreciated that they have different patterns of fat coverage from each other.

The difference in fat thickness also varies considerably from animal to animal and, as can be appreciated from Figures 6 and 7, the fat thickness varies along the length of the chop. For example, the fat thickness in the region of arrow A in Figure 7 is significantly less than that in the region of the arrow B.

To be acceptable to major retailers, such as supermarket chains, the fat cover on a cut of meat such as a lamp chop must be substantially uniform from chop to chop and over the length of each chop. The preferred thickness of the fat cover is typically 5mm. The desired fat thickness in the chops shown in Figures 6 and 7 is indicated by dashed line X. To meet the requirements of the retailers, the surplus fat beyond the line X must be trimmed off. It is difficult to perform this trimming operation accurately by hand, yet inadequate trimming can lead to the meat being rejected by the retailer.

Figure 8 illustrates the principle of equipment for trimming the surplus fat from a lamb chop in a fast and accurate manner. The equipment comprises a cutter in the form of a trimming knife 102 mounted on a radius arm 104 which is pivotable about a pivot point 106. The radius arm 104 is powered, so as to drive the trimming knife 102 along an arcuate cutting path 108. An example of a system of this type is described in GB-A-2302008.

Situated just outside the cutting path 108 is an abutment wall 100. The abutment wall 100 is made from a relatively thin, flexible material, such as strip steel.

The abutment wall 100 is acted upon by a plurality of positioning actuators of the type illustrated in Figures 1 to 5 and 10 indicated diagrammatically by arrows 120. Further actuators, indicated by arrows 140, act in the direction towards the abutment wall 100 from its inner surface and, as can be appreciated from Figure 8, the actuators 140 serve to press a chop C (which is the chop shown in Figure 6) against the abutment wall 100.

In the processing of a chop to remove surplus fat, the chop is first assessed to determine how much fat should be removed from each portion along its length. This assessment can be performed in several different ways, but a preferred arrangement is for the chop to be pictured by an image scanning device such as a TV camera. The resulting image is then processed to determine the thickness of fat at different locations. For example, the fat thickness may be determined at the locations a to f in Figure 6. From the measured thickness at each location a to f is then subtracted the desired fat thickness (e.g. 5mm) and the resulting difference measurement is then applied to the respective actuators 120 to cause the abutment wall 100 to be displaced away from the cutting path 108 by the respective distance measurement. The resulting configuration of the abutment wall 100 is shown in Figure 8.

The chop C is placed with the outer surface of the fat layer in contact with the abutment wall 100 and is pressed firmly into position by means of the actuators 140. This causes the chop to be deformed, the intention being that the desired thickness line X shown in Figure 6 lies as close as possible to the cutting path 108 of Figure 8. Consequently, operation of the trimming knife 102 results in the correct amount of fat being trimmed from the chop along its length to leave the desired thickness of fat covering on the lean meat.

It will be noted that, at the location d in Figure 6, there is no lean meat, and consequently, unless an adjustment is made, a very large fat thickness measurement will be obtained. The image processing equipment is preferably adjusted so that a fat thickness measurement above a predetermined level results in a default measurement being applied to the appropriate actuator 120.

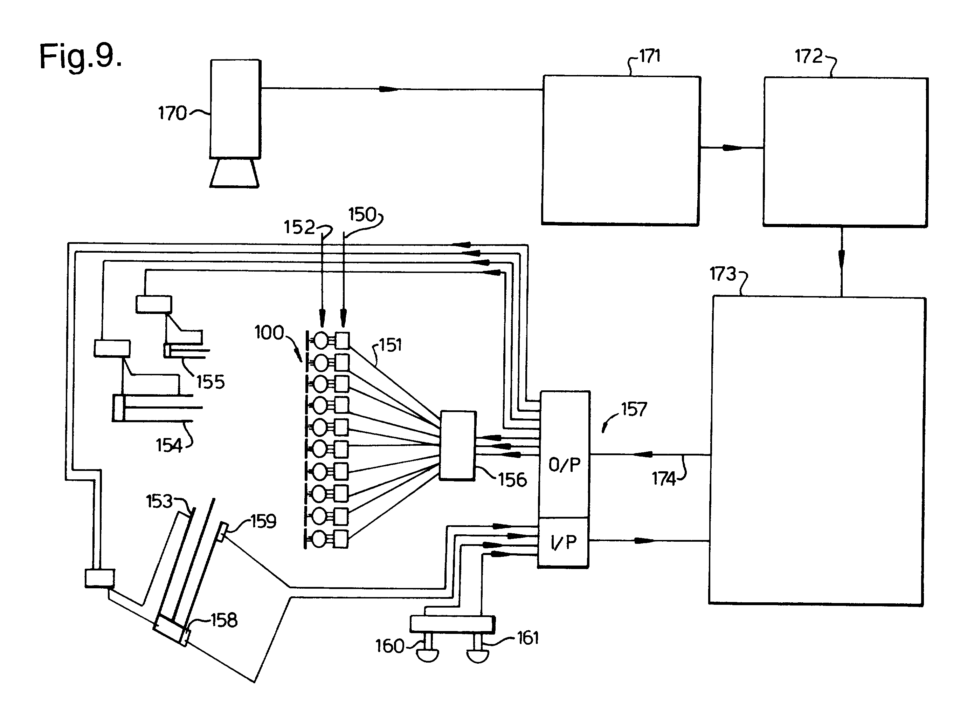

Figure 9 shows details of a fat trimming system of the type illustrated diagrammatically in Figure 8. A conformable wall 100 is acted upon by a plurality of positioning systems 152. Preferably the positioning systems 152 are of the type illustrated in any of Figures 1-5 or 10. Each positioning system 152 is driven by a respective valve 150 which is controlled by a binary signal on a respective control line 151 from amplifier electronics 156.

The wall 100 is constructed in segments constrained at both ends by pins connected to a respective positioning system. One end of each segment is free to rotate and the other end is able to rotate and slide in a slot in the segment. This wall construction allows for the expansion, contraction and shape changes required for meat section configuration.

A blade (not shown) is driven by a blade cylinder 153 and a main clamp 154 and secondary clamp 155 act towards the wall 100 to press a chop (not shown) against the wall 100.

Amplifier electronics 156, blade cylinder 153, main clamp 154 and secondary clamp 155 are each connected to an input/output card 157 controlled by a conventional PC.

Blade cylinder 153 has end of travel sensors 158,159 which are attached to input/output card 157. Operator buttons 160,161 for providing operator input are also connected to input/output card 157.

TV camera 170 images a chop to be trimmed and the resulting image is processed by vision decoder 171 to provide an input to rule base system 172. Rule base system 172 generates a desired configuration of each of the positioning systems 152 as follows. A gauge line aligned with actuator motion is defined in screen co-ordinates and the intensity of each pixel on the gauge line is determined. The gauge line is sited to cross the light-dark or dark-light feature to be detected. Examination of pixel intensity change and rate of change along the gauge is used to locate dark-light or light dark features. An additional filter feature can be used to ignore features below a particular size. The resulting gauge line coordinates are output to supervisory controller 173. The supervisory controller then outputs a control signal on output line 174 to actuate the positioning systems 152 as required.

In an alternative method of fat trimming (not shown), the fat thickness profile of a lamb chop (or other 2D meat section) is captured using XY vision or linescan camera technology. Then as the chop is conveyed forward past a cutting edge the relative distance between the fat-lean interface and the cutting means is dynamically altered (by moving the chop or the cutting means using a positioning system such as the system illustrated in Figures 1-5 or 10) with respect to the fat thickness profile to leave a consistent fat thickness remaining on the meat section.

The fat thickness profile can either be stored or captured in-line with the cutting means with the position changes taking place instantaneously in real-time.

It should be noted that the solenoid valves 24 in Figure 1 may be driven by means other than solenoids, e.g. by compressed air or manual operation. The valves 24 are connected in parallel to a single pneumatic pressure source 35 but in an alternative each valve 24 may be connected independently to a respective pneumatic pressure source.

The positioning system of Figures 1-5 and 10 are all constructed to position a point along a straight line. However each positioning system could be constructed to position a point along a curved or other non-linear path. For instance the cylinders 6 and rods 9 in Figure 1, or the cylinders 200-202 and carriages 206-208 in Figure 10 could be curved or otherwise shaped to give incremental rotary movement.

## Claims

1. A positioning system comprising at least two position control assemblies, each assembly being independently actuable between contracted and expanded configurations defining a respective stroke length, wherein the assemblies are coupled together such that actuation of one of the assemblies causes movement of another assembly, and characterised in that the stroke lengths of at least two of the position control assemblies are different.

2. A system according to claim 1 wherein the different stroke lengths define a binary power series.

3. A system according to any of the preceding claims further comprising an input device for inputting a required position, a processor for selecting one or more assemblies in accordance with the required position, and actuating means for actuating the selected assemblies.

4. A system according to claims 2 and 3 wherein the processor generates a binary number in response to the required position, each digit of the binary number defining whether or not a corresponding assembly is actuated.

5. A system according to any of the preceding claims wherein each assembly comprises a support and a positioning member mounted to the support for movement between the contracted and expanded configurations, wherein each support is coupled to an adjacent support by a respective positioning member.

6. A system according to any of the preceding claims wherein each assembly is fully contracted in its contracted configuration, and fully expanded in its expanded configuration.

7. A system according to any of the preceding claims wherein the assemblies are coupled whereby the strokes of each assembly overlap.

8. A system according to claim 7 wherein the assemblies are nested.

9. Food processing apparatus comprising a guide which abuts an item of food, and a positioning system according to any of the preceding claims which is coupled in use to the guide.

10. Apparatus for trimming surplus fat from a cut of meat comprising an abutment wall for engagement by the outer surface of a fat layer on the cut of meat; a cutter which, in use, moves along a cutting path extending along the fat layer; and one or more positioning systems according to any of claims 1 to 8 engaging the abutment wall or the cutter for varying the distance between the abutment wall and the cutting path at one or more points along the length of the cutting path.

11. Apparatus according to claim 10 and at least claim 3 wherein the input device comprises means for determining the thickness of the fat layer.

12. A method of positioning, the method comprising selecting one or more position control assemblies in a positioning system according to any of claims 1 to 8, and actuating the selected assemblies.

13. A method of positioning an item of food, the method comprising coupling a positioning system according to any of claims 1 to 8 to the item of food, selecting one or more of the position control assemblies, and actuating the selected assemblies.

14. A method of trimming surplus fat from a cut of meat, the method comprising engaging the outer surface of a fat layer on the cut of meat with an abutment; passing a cutter through the fat layer along a cutting path; and varying the distance between the abutment wall and the cutting path at one or more points along the length of a cutting path using one or more positioning systems according to any of claims 1 to 8 engaging the abutment wall or the cutter.

# Fig.1.

SIGNAL
AMPLIFIERS

5/2
SOLENOID
VALVES

BIT 4 - 16mm  SIGNAL

BIT 3 - 8mm  SIGNAL

BIT 2 - 4mm  SIGNAL

BIT 1 - 2mm  SIGNAL

BIT 0 - 1mm  SIGNAL

PNEUMATIC
PRESSURE
SOURCE

# Fig.2.

# Fig.3.

STROKE 1mm

STROKE 2mm

STROKE 4mm

STROKE 8mm

STROKE 16mm

BITS

ADDRESS

EP 0 848 308 A1

# Fig.4A.

# Fig.4B.

# Fig.5.

A.

74    73    64
72    71

B.

74    73    72
71

C.

74    73
72    71

D.

74    73    72    71

# Fig.6.

# Fig.7.

# Fig.8.

Fig.9.

EP 0 848 308 A1

# Fig.10.

European Patent Office

**EUROPEAN SEARCH REPORT**

Application Number

EP 97 30 9968

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 94 15513 A (MELDERICK CORP N V ;BIAGIO CARLO DI (IT)) 21 July 1994<br><br>* page 5, line 3 - page 7, line 32; claims 1-4; figures 1-3 * | 1-3,5,7, 12-16, 20,21 | G05B19/19<br>F15B15/20<br>A22C17/00 |
| P,X | GB 2 302 008 A (LLOYD MAUNDER LTD) 8 January 1997<br>* page 3, line 24 - page 8, line 12; figures 1-7 * | 17-23 | |
| X<br>Y | DE 38 06 390 A (HUNGER WALTER) 7 September 1989<br>* column 2, line 23 - column 5, line 1; figures 1,2 * | 1-3, 12-14<br>5,7-9, 11,16-23 | |
| Y | GB 2 000 961 A (KJ MASKINFABRIKEN A S) 24 January 1979<br>* page 2, line 36 - page 3, line 79; claims 1,6,10; figures 1,2 * | 5,7-9, 11,16-23 | |
| A | EP 0 494 935 B (UNIV BRISTOL) 1 March 1995<br>* column 2, line 54 - column 6, line 16; figures 1-3 * | 1-23 | **TECHNICAL FIELDS SEARCHED** (Int.Cl.6)<br><br>G05B<br>F15B<br>A22C |
| A | US 4 125 974 A (KAY CHRISTOPHER G ET AL) 21 November 1978<br>* column 4, line 4 - column 10, line 34; figures 1,10 * | 1-15 | |
| A | US 5 341 724 A (VATEL BRONISLAV) 30 August 1994<br>* column 2, line 36 - column 4, line 65; figures 1-6 * | 1-15 | |
| A | EP 0 324 522 A (BOEKEL CORNELIS DIRK) 19 July 1989<br>* the whole document * | 1-23 | |

-/--

The present search report has been drawn up for all claims

| Place of search | Date of completion of the search | Examiner |
|---|---|---|
| THE HAGUE | 18 March 1998 | Tran-Tien, T |

EPO FORM 1503 03.82 (P04C01)

17

**European Patent Office**

**EUROPEAN SEARCH REPORT**

Application Number

EP 97 30 9968

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 324 228 A (VOGELEY JR ARTHUR W) 28 June 1994 <br> * column 2, line 24 - column 7, line 50; figures 1,2 * | 16-23 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 18 March 1998 | Tran-Tien, T |